# EUROPÄISCHE PATENTSCHRIFT

(11) **EP 3 713 880 B1**
(45) Veröffentlichungstag und Bekanntmachung des Hinweises auf die Patenterteilung: **29.09.2021**
(21) Anmeldenummer: 18795506.7
(22) Anmeldetag: 26.10.2018
(51) Int. Cl.: C02F 1/50

(54) **BIOAKTIVER FILTER**
BIOACTIVE FILTER
FILTRE BIOACTIF

(30) Priorität: 23.11.2017 DE 202017107123 U
(43) Veröffentlichungstag der Anmeldung: 30.09.2020
(73) Patentinhaber: Benzing, Christian P., 70192 Stuttgart (DE)
(72) Erfinder: Benzing, Christian P., 70192 Stuttgart (DE)
(74) Vertreter: Fleck, Hermann-Josef
(86) Internationale Anmeldenummer: PCT/EP2018/079388
(87) Internationale Veröffentlichungsnummer: WO 2019/101474

(56) Entgegenhaltungen:
- EP-A1- 3 235 897
- WO-A1-00/56371
- WO-A1-2015/103948
- WO-A2-2011/139835
- DE-A1-102015 221 750
- US-A1- 2007 138 071

## Beschreibung

Die Erfindung betrifft einen bioaktiven Filter zur Desinfektion von Flüssigkeiten, insbesondere Wasser oder wässrigen Lösungen in Behältnissen.

Die bekannten Filter bzw. Filtermethoden zur Desinfektion von Flüssigkeiten, wie z. B. Wasser oder wässrigen Lösungen, verwenden entweder antimikrobielle Desinfektionslösungen mit aggressiven chemischen Substanzen wie z. B. Alkohole, Phenole, Formaldehyd oder stark oxidierende Agenzien wie z. B. Bleichmittel, Hypochlorit oder mineralische Säuren. Andere Filter bzw. Filtermethoden verwenden Silber, dessen antibakterielle Wirkung seit langem bekannt ist. Die biozide Wirkung des Silbers bzw. von Silberionen und deren Konzentration in einer Flüssigkeit basiert auf drei wesentlichen Faktoren: 1. Silberionen zerstören die zellulären Transportmechanismen und die proteolytischen Aktivitäten der Bakterienzellen durch Bindung an Enzyme und Strukturproteine der bakteriellen Zellwand und Zellmembran. 2. Silberionen verhindern die DNA-Replikation von Bakterien durch die Bindung an die DNA. 3. Silberionen blockieren die Atmungskette der Bakterien an den Zytochromen und behindern den Stoffwechsel.

Die Nachteile dieser Filter und Methoden bestehen zum einen darin, dass die verwendeten Chemikalien und oxidierenden Agenzien ein hohes korrosives und toxisches Potential aufweisen, welche die verwendeten Geräte und ihre Oberflächen beschädigen und eine Gefahr für den Menschen darstellen, da das so behandelte Wasser bzw. die wässrigen Lösungen ungenießbar und ggf. schädlich ist. Die durch die Verwendung von Silber hergestellten Filter sind zum anderen problematisch entweder durch die direkte Lösung des Silbers in der Flüssigkeit oder sind sehr aufwändig in Bezug auf die Anzahl der verwendeten Substanzen bzw. den Produktionsprozess und benötigen oftmals eine Vielzahl einzelner Filterelemente, um eine bestimmte Menge der Flüssigkeit zu desinfizieren. Außerdem bringt die klassische Silbertechnologie einige Probleme mit sich wie z. B. einen zeitlich stark verzögerten Einsatz der keimabtötenden Wirkung, eine Abhängigkeit von der Freisetzung und Stabilisierung freier Silberionen, die Inaktivierung von Silberionen durch Schwefelverbindungen oder Komplexbildner und ein begrenztes Wirkungsspektrum für die effiziente mikrobielle Dekontamination.

Aus der Druckschrift EP 2 077 976 B1 ist ein Filter zur Dekontaminierung und Desinfektion von Wasser oder wässrigen Lösungen bekannt, der eine bioaktive Beschichtung aufweist, die zumindest Ruthenium oder Silber-Ruthenium-Bimetall-Partikel umfasst und auf eine Silber- oder silberhaltige Oberfläche aufgebracht oder mit einer Silber-Beschichtung in Kontakt ist, wobei die Beschichtung zusätzlich das Vitamin Ascorbinsäure und mindestens eine oberflächenaktive Substanz umfasst. Der für die Filterung notwendige Effekt wird dabei durch die zusätzlich zu den Edelmetallen Silber und Ruthenium verwendete Ascorbinsäure und die oberflächenaktive Substanz erzielt. Die oberflächenaktive Substanz ist dabei eine Verbindung aus der Gruppe der anionischen, nichtionischen, amphoteren oder kationischen Tenside oder eine geeignete Mischung daraus. In der Praxis bestehen diese Filter aus einer Vielzahl von einzelnen Drahtgeweben, die zu einer Spirale aufgerollt sind und sich in einem flüssigkeitsdurchlässigen Behälter befinden. Auch die DE 10 2014 042 A1 zeigt ein derartiges System zur Wasserdesinfektion.

In der US 2007/0138071 A1 sind aus einem beschichteten Netzmaterial geformte Filtermittel gezeigt, welche zur Desinfektion von Wasser in eine Brausearmatur oder einen Flüssigkeitstank eingebracht sind. Auch bei solchen Filtermitteln kann sich z. B. bei dichter Bepackung eine eingeschränkte Effektivität ergeben.

Ein weiteres System zur Desinfektion von Wasser, nämlich eine Anordnung zur oligodynamischen Sterilisierung und Aktivierung von Flüssigkeiten, insbesondere Wasser, ist in der DE 556 137 A offenbart.

Die DE 10 2015 221 750 A1 beschreibt ein beschichtetes partikuläres Polymermaterial mit Polymerpartikeln, welche mit einer metallhaltigen Schicht oder mit einer aus einem Metall bestehenden Schicht beschichtet sind, wobei das Metall ein oligodynamisch wirksames Metall ist. Die Polymerpartikel besitzen eine Partikelgröße zwischen 1 mm und 50 mm und die oligodynamisch wirksame Schicht besteht aus Silber oder einer Silberlegierung mit Kupfer und/oder Zinn oder einem Salz eines oligodynamisch wirksamen Metalls. Aus dieser Druckschrift geht kein beschichtetes Edelstahldrahtgewebe hervor.

Die EP 3 235 897 A1 zeigt eine Vorrichtung zum kontinuierlichen Desinfizieren von kühlenden Flüssigkeitslösungen und Waschwasser, bei der in einem porösen Gehäuse zumindest ein Granulatelement aufgenommen ist, welches mit Silberionen und Turmalin beschichtet und als festes und poröses Granulatelement ausgebildet ist. Das poröse Gehäuse ist aus zwei halbkugelförmigen Hälften eines Edelstahldrahtgewebes gebildet und der Rand jeder halbkugelförmigen Hälfte ist mit einem umlaufenden Ring versehen. Die beiden Ringe sind auf einer Außenseite mit einem Scharnier verbunden, so dass die beiden halbkugelförmigen Hälften aufklappbar sind, um die mit Silberionen oder Silbersalzen versehenen Granulatelemente einzufüllen. Im zusammengeklappten Zustand der beiden halbkugelförmigen Hälften sind diese auf der dem Scharnier gegenüberliegenden Seite mit einem kurzen, die beiden umlaufenden Ringe übergreifenden Verschlusselement verschließbar. Zu einer bioziden Wirkung des porösen Gehäuses selbst sind keine Aussagen gemacht.

Der vorliegenden Erfindung liegt die Aufgabe zugrunde, einen bioaktiven Filter zu entwickeln und herzustellen, welcher die oben beschriebenen Probleme und Einschränkungen beseitigt. Insbesondere ist die Aufgabe der Erfindung einen Filter bereitzustellen, der auf effiziente Weise auch bei geringer Anzahl von verwendeten Edelmetallen bzw. Substanzen arbeitet und der es ermöglicht ein größtmögliches Flüssigkeitsvolumen effektiv zu reinigen.

Diese Aufgabe wird durch den Filter mit den Merkmalen des Anspruchs 1 gelöst.

Dabei ist der Filter aus einem kugelförmigen oder ovalen (ellipsoidförmigen), insbesondere hohlen, Filterkörper gebildet, der mit Edelmetallen beschichtet ist.

Insbesondere durch die Kugelform wird eine große Oberfläche erhalten, die zudem vorteilhaft die Innenfläche schützt und auch eine gute Durchströmung ermöglicht. Durch die Form werden auch beim Einwerfen ins Wasser Sauerstoffmoleküle vorteilhaft aufgenommen, die die Kugel bzw. den Filter eine Weile im Wasser schweben lassen. Durch Drehen und eine Durchdringung des Wassers wird die effektive Reinigungswirkung unterstützt. Je nach Flüssigkeitsmenge können auch mehrere Kugeln additiv kombiniert werden.

Für die Herstellung und auch Wirkung ist dabei der vorzugsweise hohle Filterkörper vorteilhaft aus zwei, insbesondere hohlen, halbkugelförmigen Filterteilen aus Edelstahldrahtgewebe ausgestaltet, die mittels eines Edelstahlrings miteinander verbunden sind. Dabei weisen die Filterteile auf ihren offenen Seiten zum Verbinden vorteilhaft jeweils einen nach außen (radial) abstehenden Kragen auf und der Edelstahlring verbindet die beiden Kragen miteinander bzw. legt sie aneinander fest. Der Kragen mit dem umlaufenden Edelstahlring ergibt gute Durch- und Umströmungseigenschaften und erzeugt vorteilhaft gegenseitige Abstände zwischen mehreren Filterkörpern.

Für die Funktion und Herstellung des Filters ist dabei weiterhin vorteilhaft vorgesehen, dass das Drahtgewebe und/oder der Ring mit mindestens zwei Edelmetallen beschichtet ist/sind.

Weitere Verbesserungen ergeben sich aus den Merkmalen der Unteransprüche.

In einer für die Funktion des Filters vorteilhaften Ausgestaltung ist mindestens eines der Edelmetalle Silber und/oder Ruthenium.

Eine für die Funktion des Filters weitere vorteilhafte Ausgestaltung besteht darin, dass die Edelmetalle in einem Feuchtigkeitskontakt mit der Umgebung stehen.

In einer weiteren für die Herstellung des Filters vorteilhaften Ausgestaltung sind die Edelmetalle entweder nacheinander oder als Bimetall-Partikel auf das Drahtgewebe und/oder der Ring aufgebracht.

Eine weitere für die Herstellung des Filters vorteilhafte Ausgestaltung wird dadurch erreicht, dass die Edelmetalle auf das Drahtgewebe und/oder den Ring mittels eines mechanischen, galvanischen oder vakuumtechnischen Verfahrens aufgebracht sind.

Eine für die Verwendung und Funktion des Filters weitere vorteilhafte Ausgestaltung zeichnet sich dadurch aus, dass beim Gebrauch durch das Drahtgewebe und/oder den Ring innerhalb der Flüssigkeit Turbulenzen ausgebildet sind, die den Kontakt zwischen der bioaktiven Beschichtung des Filters und den Molekülen der Flüssigkeit erhöhen.

In einer für die Verwendung und Funktion des Filters weiteren vorteilhaften Ausgestaltung ist der Filter so ausgebildet, dass bei bewegter Flüssigkeit durch das Drahtgewebe und/oder den Ring eine Bewegung des Filters verstärkt ist.

In einer für die Verwendung und Funktion des Filters weiteren vorteilhaften Ausgestaltung ist der Filterkörper in der Weise ausgestaltet, dass durch das Drahtgewebe und/oder den Ring eine Ablagerung von in der Flüssigkeit schwebenden Teilchen, wie z. B. Kalk, an einer Wandung des Behältnisses vermieden ist und die Teilchen darin bzw. daran gebunden sind.

In einer für die Herstellung des Filters weiteren vorteilhaften Ausgestaltung ist der Ring auf die Kragen aufgepresst, aufgecrimpt, aufgeprägt, aufgenietet oder aufgeschweißt.

In einer für die Funktion des Filters weiteren vorteilhaften Ausgestaltung sind das Drahtgewebe und/oder der Ring mit mindestens einem weiteren reaktionsverstärkenden Stoff beschichtet.

Die Erfindung wird nachfolgend anhand eines Ausführungsbeispiels unter Bezugnahme auf die Zeichnungen näher erläutert. Es zeigen:
- Fig. 1: eine perspektivische Ansicht eines Filterkörpers mit einem halbkugelförmigen Filterteil,
- Fig. 2: eine perspektivische Ansicht eines fertig montierten Filters,
- Fig. 3: einen Querschnitt des fertig montierten Filters.

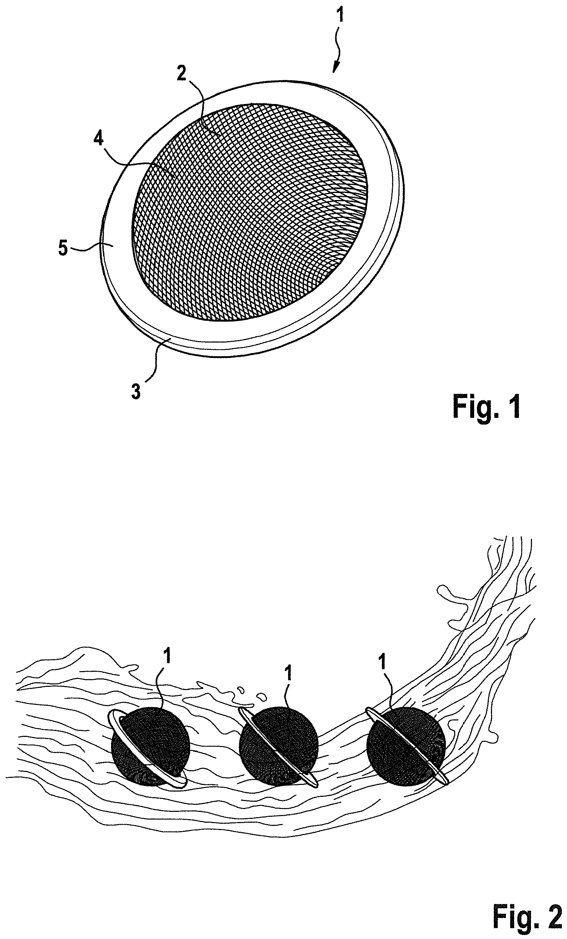

Fig. 1 zeigt ein halbkugelförmiges Filterteil 4, das aus einem Edelstahldrahtgewebe 2 besteht. Das Filterteil 4 weist dabei einen am offenen Ende der Halbkugel abstehenden Kragen 5 auf. Es ist entweder zunächst mit Silber und anschließend mit Ruthenium oder mit Bimetall-Partikeln beschichtet, die aus beiden Edelmetallen bestehen. Die Beschichtung kann dabei mittels eines mechanischen, galvanischen oder vakuumtechnischen Verfahrens aufgebracht werden. Das auf die Silberschicht aufgebrachte Ruthenium bzw. das mit dem Silber in Bimetall-Partikeln verbundene Ruthenium wirkt dabei als Kontaktkatalysator für die Bildung und Herauslösung von Silberionen aus dem Silber und den Übergang in Flüssigkeiten. Diese Silberionen kommen anschließend mit den Zellen von in der Flüssigkeit enthaltenen Keimen in Kontakt und wirken destabilisierend auf die Zellmembran. Dadurch werden der Zellstoffwechsel und der Zellteilungsprozess gestört. Außerdem werden in situ, also während des Reaktionsprozesses, zusätzlich reaktive Sauerstoffspezies (ROS), auch Sauerstoffradikale genannt, gebildet. Die gebildeten ROS nehmen genauso wie die abgegebenen Silberionen Einfluss auf die DNA, die Zellmembran sowie die Membranproteine. Anders als bei der klassischen Silberanwendung in Filtern ist die hohe antimikrobielle Wirkung dabei nicht mehr maßgeblich von der Silberionenkonzentration abhängig.

Fig. 2 zeigt einen fertig montierten Filter. Zur Herstellung des Filterkörpers 1 werden während der Montage die beiden halbkugelförmigen, vorzugsweise hohlen Filterteile 4 mit ihren Kragen 5 aneinandergelegt und anschließend werden die Kragen 5 mittels eines Edelstahlringes 3 durch Pressen, Crimpen, Prägen, Nieten oder Schweißen miteinander verbunden. Durch das Drahtgewebe 2 und/oder den Ring 3 werden in der Flüssigkeit durch die Eigenbewegung der Flüssigkeit Turbulenzen hervorgerufen, die selbst bei in der Flüssigkeit ruhendem Filter eine maximale Anzahl von Silberionen bzw. Sauerstoffradikalen mit in der Flüssigkeit umherwandernden Keimen in Verbindung bringt. Bei zusätzlicher Bewegung der Flüssigkeit, z. B. durch Bewegung des Flüssigkeitsbehältnisses oder Umwälzen der Flüssigkeit innerhalb des Behältnisses wird durch das Drahtgewebe 2 und/oder den Ring 3 eine Bewegung des Filters verstärkt, was zu einer weiteren Erhöhung der Kombinationen aus Silberionen/Sauerstoffradikalen und Keimen führt. Durch diese passive bzw. aktive Umwälzung der Flüssigkeit ist das Wirkumfeld des Filters stark vergrößert, im Vergleich zu anderen Lösungen aus dem Stand der Technik, so dass mit nur einem Filter ein deutlich größeres Flüssigkeitsvolumen desinfiziert werden kann. Dadurch ist der Aufwand bei der Filterherstellung ebenso deutlich verringert und der Materialeinsatz sowie die Kosten sind gesenkt. Ein weiterer Effekt des Drahtgewebes 2 und/oder des Rings 3 ist, dass eine Ablagerung von in der Flüssigkeit schwebenden Teilchen, wie z. B. Kalk, an einer Wandung des Behältnisses vermieden wird und dass die Teilchen darin bzw. daran gebunden werden. Das Drahtgewebe 2 und/oder der Ring 3 kann außerdem mit mindestens einem weiteren reaktionsverstärkenden Stoff beschichtet sein, was die Reaktionsfreudigkeit der vom Filter abgegebenen Wirkstoffe mit den Keimen noch weiter erhöht.

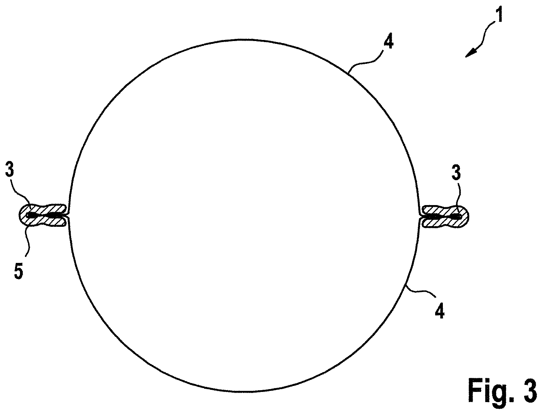

Fig. 3 zeigt den Filter im Querschnitt, mit dem Filterkörper 1, den beiden halbkugelförmigen Filterteilen 4, den Kragen 5 und den die Kragen 5 verbindenden Ring 3, wobei dieser die beiden Kragen 5 umfasst und z. B. durch Prägen festgelegt ist. Die halbkugelförmigen, vorzugsweise aus einer Schicht, alternativ aus mehreren Schichten bestehenden Filterteile 4 können einfach z. B. durch Einmulden beziehungsweise Verformen aus flächigem, flachem Gitter- beziehungsweise Gewebematerial hergestellt werden.

Der Einsatzzweck des Filters liegt insbesondere in der Wasseraufbereitung z. B. für Tanks von Kaffee- oder Teezubereitungsmaschinen, Trinkflaschen, Karaffen, Mundduschen, Blumenvasen, mobilen Wasservorratsbehältern z. B. im Caravaning-Bereich oder fest eingebaut in Wasserzuleitungen. Seine weiteren Vorteile liegen in der schnellen und dauerhaften Reduktion von Keimen in der Flüssigkeit und seiner einfachen und langen Verwendbarkeit.

## Patentansprüche

1. Bioaktiver Filter zur Desinfektion von Flüssigkeiten, insbesondere Wasser oder wässrigen Lösungen in Behältnissen, wobei
ein kugelförmiger oder ovaler Filterkörper (1) gebildet ist, der mit Edelmetallen beschichtet ist,
**dadurch gekennzeichnet,**
**dass** der Filterkörper (1) aus zwei halbkugelförmigen Filterteilen (4) aus Edelstahldrahtgewebe (2) besteht, die mittels eines Rings (3) aus Edelstahl miteinander verbunden sind,
**dass** die Filterteile (4) auf ihren offenen Seiten randseitig jeweils einen nach außen abstehenden Kragen (5) aufweisen,
**dass** der Ring (3) die beiden Kragen (5) miteinander verbindet und
**dass** das Drahtgewebe (2) und/oder der Ring (3) mit mindestens zwei Edelmetallen beschichtet ist/sind.

2. Filter nach einem der vorherigen Ansprüche,
**dadurch gekennzeichnet,**
**dass** mindestens eines der Edelmetalle Silber und/oder Ruthenium ist.

3. Filter nach einem der vorherigen Ansprüche,
**dadurch gekennzeichnet,**
**dass** die Edelmetalle bei Gebrauch in einem Feuchtigkeitskontakt mit der Umgebung stehen.

4. Filter nach einem der vorhergehenden Ansprüche,
**dadurch gekennzeichnet,**
**dass** die Edelmetalle entweder nacheinander auf das Drahtgewebe (2) und/oder den Ring (3) aufgebracht sind oder
**dass** sie als Bimetall-Partikel aufgebracht sind.

5. Filter nach einem der vorhergehenden Ansprüche,
**dadurch gekennzeichnet,**
**dass** die Edelmetalle auf das Drahtgewebe (2) und/oder den Ring (3) mittels eines mechanischen, galvanischen oder vakuumtechnischen Verfahrens aufgebracht sind.

6. Filter nach einem der vorhergehenden Ansprüche,
**dadurch gekennzeichnet,**
**dass** der Ring (3) auf die Kragen (5) aufgepresst, aufgecrimpt, aufgeprägt, aufgenietet oder aufgeschweißt ist.

7. Filter nach einem der vorhergehenden Ansprüche,
**dadurch gekennzeichnet,**
**dass** das Drahtgewebe (2) und/oder der Ring (3) mit mindestens einem weiteren reaktionsverstärkenden Stoff beschichtet ist/sind.

8. Verwendung eines Filters nach einem der vorhergehenden Ansprüche in einer Flüssigkeit,
**dadurch gekennzeichnet,**
**dass** durch das Drahtgewebe (2) und/oder den Ring (3) beim Gebrauch Turbulenzen innerhalb der Flüssigkeit ausgebildet sind.

9. Verwendung nach Anspruch 8,
**dadurch gekennzeichnet,**
**dass** bei bewegter Flüssigkeit durch das Drahtgewebe (2) und/oder den Ring (3) eine Bewegung des Filters verstärkt ist.

10. Verwendung nach Anspruch 8 oder 9,
**dadurch gekennzeichnet,**
**dass** der Filterkörper (1) in der Weise ausgestaltet ist, dass durch das Drahtgewebe (2) und/oder den Ring (3) eine Ablagerung von in der Flüssigkeit schwebenden Teilchen, wie z. B. Kalk, an einer Wandung des Behältnisses vermieden ist und
**dass** durch das Drahtgewebe (2) und/oder den Ring (3) die Teilchen gebunden sind.

## Claims

1. Bioactive filter for disinfecting liquids, in particular water or aqueous solutions in containers,
a spherical or oval filter body (1) being formed which is coated with noble metals,
**characterized in that**
the filter body (1) consists of two hemispherical filter parts (4) which are made of stainless steel wire mesh (2) and are connected to one another by means of a ring (3) made of stainless steel,
**in that** the filter parts (4) each have an outwardly protruding collar (5) on the open sides thereof,
**in that** the ring (3) connects the two collars (5) and
**in that** the wire mesh (2) and/or the ring (3) is/are coated with at least two noble metals.

2. Filter according to any of the preceding claims,
**characterized in that**
at least one of the noble metals is silver and/or ruthenium.

3. Filter according to either of the preceding claims,
**characterized in that**
the noble metals are in moisture contact with the surroundings during use.

4. Filter according to any of the preceding claims,
**characterized in that**
the noble metals are either applied one after the other to the wire mesh (2) and/or the ring (3) or
**in that** they are applied as bimetal particles.

5. Filter according to any of the preceding claims,
**characterized in that**
the noble metals are applied to the wire mesh (2) and/or the ring (3) by means of a mechanical, galvanic or vacuum-technology process.

6. Filter according to any of the preceding claims,
**characterized in that**
the ring (3) is pressed, crimped, stamped, riveted or welded onto the collar (5).

7. Filter according to any of the preceding claims,
**characterized in that**
the wire mesh (2) and/or the ring (3) is/are coated with at least one further reaction-enhancing substance.

8. Use of a filter according to any of the preceding claims in a liquid,
**characterized in that**
during use, turbulence is formed within the liquid by means of the wire mesh (2) and/or the ring (3).

9. Use according to claim 8,
**characterized in that**
when the liquid moves through the wire mesh (2) and/or the ring (3), a movement of the filter is amplified.

10. Use according to either claim 8 or claim 9,
**characterized in that**
the filter body (1) is designed in such a way that the wire mesh (2) and/or the ring (3) prevents particles, such as lime, floating in the liquid from depositing on one wall of the container and
**in that** the particles are bound by the wire mesh (2) and/or the ring (3).

## Revendications

1. Filtre bioactif permettant de désinfecter des liquides, en particulier de l'eau ou des solutions aqueuses dans des récipients,
un corps de filtre (1) sphérique ou ovale étant formé, lequel corps étant revêtu de métaux précieux,
**caractérisé en ce**
**que** le corps de filtre (1) se compose de deux parties filtrantes (4) hémisphériques en treillis métallique en acier inoxydable (2), qui sont reliées l'une à l'autre au moyen d'une bague (3) en acier inoxydable,
**que** les parties filtrantes (4) présentent chacune une collerette (5) faisant saillie vers l'extérieur sur leurs côtés ouverts côté bord,
**que** la bague (3) relie les deux collerettes (5) l'une à l'autre et
**que** le treillis métallique (2) et/ou la bague (3) sont revêtu(e)s d'au moins deux métaux précieux.

2. Filtre selon l'une des revendications précédentes,
**caractérisé en ce**
**qu'**au moins un des métaux précieux est l'argent et/ou le ruthénium.

3. Filtre selon l'une des revendications précédentes,
**caractérisé en ce**
**que** les métaux précieux sont en contact d'humidité avec l'environnement pendant l'utilisation.

4. Filtre selon l'une des revendications précédentes,
**caractérisé en ce**
**que** les métaux précieux sont appliqués soit l'un après l'autre sur le treillis métallique (2) et/ou la bague (3), soit en ce
**qu'**ils sont appliqués sous forme de particules bimétalliques.

5. Filtre selon l'une des revendications précédentes,
**caractérisé en ce**
**que** les métaux précieux sont appliqués sur le treillis métallique (2) et/ou la bague (3) au moyen d'un procédé mécanique, galvanique ou de technique sous vide.

6. Filtre selon l'une des revendications précédentes,
**caractérisé en ce**
**que** la bague (3) est pressée, sertie, emboutie, rivetée ou soudée sur les collerettes (5).

7. Filtre selon l'une des revendications précédentes,
**caractérisé en ce**
**que** le treillis métallique (2) et/ou la bague (3) sont revêtu(e)s d'au moins une autre substance amplifiant la réaction.

8. Utilisation d'un filtre selon l'une des revendications précédentes dans un liquide, **caractérisée en ce**
**que**, pendant l'utilisation, des turbulences sont formées à l'intérieur du liquide par le treillis métallique (2) et/ou la bague (3).

9. Utilisation selon la revendication 8,
**caractérisée en ce**
**que** lorsque le liquide est en mouvement, un mouvement du filtre est amplifié par le treillis métallique (2) et/ou la bague (3).

10. Utilisation selon la revendication 8 ou 9,
**caractérisée en ce**
**que** le corps de filtre (1) est conçu de telle manière qu'un dépôt de particules en suspension dans le liquide, telles que de la chaux, est évité sur une paroi du récipient par le treillis métallique (2) et/ou la bague (3) et
**que** les particules sont liées par le treillis métallique (2) et/ou la bague (3).
